# EUROPEAN PATENT APPLICATION

(11) **EP 3 165 790 A1**
(43) Date of publication of application: **10.05.2017**
(21) Application number: 16163670.9
(22) Date of filing: 04.04.2016
(51) Int. Cl.: F16H 3/00, F16H 3/089, F16H 3/72, F16H 3/12

(54) **MULTI-SPEED TRANSMISSION AND METHOD FOR OPERATING A MULTI-SPEED TRANSMISSION**

(71) Applicant: AVL List GmbH, 8020 Graz (AT)
(72) Inventor: DAVYDOV, Vitaly, 8020 GRAZ (AT); NISSEN, Peter-Jürgen, 8045 GRAZ (AT)
(74) Representative: Babeluk, Michael

(57) **Abstract**

The invention relates to a multi-speed transmission (10), comprising an input shaft (11), a first driveshaft (13) having at least one driving gearwheel (G1a, G2a, G3a, G4a, G5a), a second driveshaft (14), having a at least two driving gearwheels (GRa, GLa, G1a, G2a, G3a, G34a, G45a), at least one driven shaft (15) with a plurality of gearwheels (Gb, GLb, G1b, G2b, G3b, G4b, G34b, G45b,) on it meshing with the driving gearwheels (GRa, GLa, G1a, G2a, G3a, G4a, G34a, G45a) on said driveshafts (13, 14), said gearwheels (GRa, GLa, G1a, G2a, G3a, G4a, G34a, G45a; Gb, GLb, G1b, G2b, G3b, G4b, G34b, G45b) for forward speeds being engageable to said shafts (13, 14; 15, 16) with a first clutch (C1L) a second clutch (C1R), a third clutch (C2L), a fourth clutch (C2R) and a fifth clutch (C3R) forming a power flow from said driveshafts (13, 14) to the driven shaft (15) with different ratios, a controllable lock-up clutch (C3L) being arranged between the driveshafts (13, 14), connecting said driveshafts (13, 14) with each other, a brake device (40) with controllable slip, a planetary gearset (20) with three links (21, 22, 23), a first (21) of said links being connected to the first driveshaft (13) and the input shaft (11), a second link (22) being connected to the second driveshaft (14), and a third link (23) being kinematically connected to said brake device (40).

A speed ratio (i_{PGS}) between the second link (22) and the third link (23) for stopped first link (21) has a defined value i_{PGS} <0, a first gear ratio (i_{G1}) of the first gearing (GL) on the second driveshaft (14) has a defined value i_{G1}, a second gear ratio (i_{G2}) of the first gearing (G1) on the first driveshaft (13) matches the inequality i_{G2} >= i_{G1}/ (1-(1/i_{PGS})), a third gear ratio (i_{G3}) of the second gearing (G2) on the second driveshaft (14) matches the inequality i_{G3} < i_{G2}, a fourth gear ratio (i_{G4}) of the second gearing (G3) on the first driveshaft (13) matches the inequality i_{G4} >= i_{G3}/ (1-(1/i_{PGS})), a fifth gear ratio (i_{G5}) of the third gearing (G4/5) on the second driveshaft (14) matches the inequality i_{G5} < i_{G4}.

## Description

The invention relates to a multi-speed transmission, especially for a vehicle, comprising an input shaft, a first driveshaft having at least one driving gearwheel, a second driveshaft, having a at least two driving gearwheels, at least one driven shaft with a plurality of gearwheels on it meshing with the driving gearwheels on said driveshafts, said gearwheels for forward speeds being engageable to said shafts with clutches forming a power flow from said driveshafts to the driven shaft with different ratios, a controllable lock-up clutch being arranged between the driveshafts, connecting said driveshafts with each other, a brake device with controllable slip, a planetary gearset with three links, a first of said links being connected to the first driveshaft and the input shaft, a second link being connected to the second driveshaft, and a third link being kinematically connected to said brake device.

Further the invention relates to a method for operating a multi-speed transmission of a vehicle, comprising an input shaft, a first driveshaft, a second driveshaft, each of the two concentric driveshafts having a plurality of driving gearwheels on them, a driven shaft with a plurality of gearwheels on it, meshing with the driving gearwheels on said driveshafts, a plurality of controllable clutches for kinematic connection of the first driveshaft to the driven shaft with different gear ratios, a plurality of controllable clutches for kinematic connection of the second driveshaft to the driven shaft with different gear ratios, a controllable lock-up clutch for direct connection between first and second driveshafts, a brake device with controllable slip, a planetary gearset with three links, a first of said links being connected to the first driveshaft and the input shaft, a second link being connected to the second driveshaft, and third link being kinematically connected to said braking device.

The publication WO 2012/112028 A9 discloses a transmission system with an input shaft which can be connected to a drive source, and an output shaft which can be connected to a load. The transmission system comprises a clutch module which has an input that is connected to the input shaft and a first and a second output, as well as first clutch means which are located between the input and the first output and second clutch means which are located between the input and the second output. The second clutch means are arranged between the drive source and the transmission parallel to an epicyclic gearing. The clutch module comprising a clutch, a brake and planetary power split device is very complex.

The document WO 2004/098937 A1 discloses a transmission system for a vehicle with an epicyclic gearing with three rotational members of which a first member is connected to a drive source, a second member is connected to the wheels of the vehicle and a third member is connected to a brake. The brake constitutes reaction means for balancing torque. The transmission system furthermore comprises a transmission which is parallel to the epicyclic gearing and a transmission which is in series with the epicyclic gearing. Moreover, the transmission system enables shifting between the various transmission ratios without torque interruption, using only one brake. The transmission can directly be connected to the load via the lock-up clutch. Besides, the transmission can be connected to the load by means of the braked planetary set.

In the transmission systems disclosed in WO 2012/112028 A9 or WO 2004/098937 A1 the speed ratio i_{PGS} between the second link and the third link for stopped first link have defined positive values: i_{PGS} >0. So these transmission systems can't provide sufficient torque fill for all gearshifts with just a single brake. The document US 8,771,139 B2 describes a power transmission unit with an engine and a plurality of speed change gear pairs, each of which has a different gear ratio, and to which a power outputted from the engine is transmitted. The power transmission unit comprises a differential mechanism, which has three rotary elements performing a differential action, and in which a first rotary element is connected with the engine. An electric motor is connected with a secondary rotary element of the three rotary elements. The plurality of speed change gear pairs include a first gear pair connected with the first rotary element and the output member, and a second gear pair connected with a third rotary element of the three rotary elements and the output member. For a carrier-to-sun-connection a separate lock-up clutch, which is apart from the plurality of clutches for engaging the gears, as well a separate actuator for that lock-up clutch, are necessary. A common shifting actuator, e.g. a shifting drum, cannot be used. The particular embodiment of the transmission comprises four cylindrical gearings, which provide only four speeds from the engine to the wheels. To increase number of speeds, or/and to add reverse, it is necessary to increase the number of gearings. This approach increases transmission length, weight and drag losses.

It is the object of the present invention to avoid these disadvantages and to provide a simplified torque filled transmission architecture with a single friction brake.

According to the invention this is achieved in that:
- a speed ratio between the second link and the third link for stopped first link has a defined value: i_{PGS} <0;
- a first gear ratio of the first gearing on the second driveshaft has a defined value: i_{G1};
- a second gear ratio of the first gearing on the first driveshaft matches the inequality i_{G2} >= i_{G1}/ (1-(1/i_{PGS}));
- a third gear ratio of the second gearing on the second driveshaft matches the inequality i_{G3} >= i_{G2};
- a fourth gear ratio of the second gearing on the first driveshaft matches the inequality i_{G4} >= i_{G3}/ (1-(1/i_{PGS}));
- a fifth gear ratio of the third gearing on the second driveshaft matches the inequality i_{G5} < i_{G4}.

In contrast to the transmission systems disclosed in WO 2012/112028 A9 or WO 2004/098937 A1 the multi speed transmission according to the present invention comprises a negative speed ratio i_{PGS} between the second link and the third link for stopped first link: i_{PGS} <0.

The gear ratio i_{G2} of the first gearing on the first driveshaft matches the inequality: i_{G2} >= i_{G1}/ (1-(1/i_{PGS})). Besides that the gear ratio i_{G3} of the second gearing on the second driveshaft matches the inequality i_{G3} >= i_{G2}. Furthermore the gear ratio i_{G4} of the second gearing on the first driveshaft matches the inequality i_{G4} >= i_{G3}/ (1-(1/i_{PGS})). In this way the transmission according to the invention can provide sufficient torque fill for all gearshifts with just a single brake.

According to a low cost variation of the invention the clutches controlling the powerflow from the first driveshaft and the lock-up clutch are designed as dog clutches, wherein the clutches controlling the powerflow from the second driveshaft are synchronizer units. In this way speed synchronization for gear preselection on the second driveshaft is possible for up- and downshifts with just brake device connected to the third link of the power split device.

According to a preferred embodiment of the invention the multi speed transmission comprises an electric drive, kinematically connected to the brake device, wherein preferably the clutches controlling the powerflow from the first driveshaft, the lock-up clutch and the clutches controlling the powerflow from the second driveshaft are dog clutches. In this embodiment the electric drive can assist shaft speed synchronization for preselecting higher gears, while the brake device can be used for preselecting lower gears.

In order to realize axially compact package of the clutch with reduced number of shifting forks at least one clutch is embodied in a way that it can alternatively connect two loose gearwheels to the output shaft, and wherein said gearwheels are arranged on opposite sides of the gearwheel which is fixed to the output shaft.

At least two dog clutches are arranged in a way that they interact with rotationally fixed gear, wherein the rotationally fixed gear may be mounted slideable or rigidly fixed in axial direction. In an embodiment with sliding gear the gear mesh of loose gearwheels is preferably helical, and the axial forces are balanced. Conventional synchronizers are long and need much axial package. Dog clutches, which are preferred in the invention, have a potential to reduce axial package. However, the hubs of the driven gearwheels should not be too short, otherwise tilting increases under axial load from helical gearing. So there is much empty space around the dog clutch.

In order to improve the NVH performance and the shifting quality of the transmission a vibration-damping device (e.g. a dual-mass-flywheel) may be arranged on the input shaft.

If another rotationally fixed gearwheel is placed together with shifting sleeve (integrated with it or other shift element is mounted through the gearwheel), the axial package remains as it was without the gearwheel.

In state of the art manual transmissions just reverse gear is embodied this way. The limitation of the state of art is that reverse gear should be straight-cut (spur).

The additional technical results of these features are reduced axial package, reduced shaft bending, and small tilting of driven gearwheels under axial loads from helical meshing. Cost and weight of the transmission are also reduced.

The multispeed transmission preferably comprises a controllable lock-up clutch being arranged between the driveshafts, connecting said driveshafts with each other, an electric machine with a rotor, and the planetary gearset with three links. A first of said links may be connected to the first driveshaft and the input shaft, a second link may be connected to the second driveshaft, and a third link may be kinematically connected to the rotor of said electric machine in a way that a speed ratio between the second link and the third link is negative for stopped first link. According to a very simple embodiment of the invention fulfilling the requirements of said speed ratio the first link of the planetary gearset is a planet carrier, the second link is a ring gear, and the third link is a sun gear.

According to a preferred embodiment of the invention the second driveshaft may be mounted internally through the first driveshaft. This embodiment gives the opportunity to have first and reverse driving pinions with high ratio on the thin internal driveshaft. The 1^{st} and reverse speeds are arranged on the second driveshaft.

According to a design variation of the invention with integrated final drive for transverse mounting and transaxle mounting (two wheel drive) or transfer gear with central differential (four wheel drive), the transmission comprises a gearwheel which constantly meshes with a pinion on the driven shaft, wherein driven links of the differential are connected to the output shafts of the transmission, and wherein preferably the gearwheel is arranged parallel to the input shaft.

A compact and low-cost multi-speed transmission with increased number of torque-fill shifted speeds can be achieved in that the transmission comprises a first clutch, a second clutch and a third clutch, wherein each of the clutches comprises a first locking position, a second locking position and a neutral position. For example the first locking position is assigned to a left side position, the second locking position is assigned to a right side locking position and the neutral position is assigned to a middle position of each clutch. Preferably the first and second clutches are arranged on the driven shaft. The first locking positions and the second locking positions of the first and second clutches are designed for kinematic connection of the first driveshaft or second driveshaft to the driven shaft with different gear ratios. More preferably the third clutch is arranged coaxial to the first and second driveshafts. In the first locking position the third clutch has the function of a lock up clutch for direct kinematic connection of first and second driveshafts.

According to a 2-shaft 5-speed embodiment the first driveshaft comprises driving gearwheels for 1^{st} and 3^{rd} speeds, and the second driveshaft comprises driving gearwheels for reverse, launch, 2^{nd}, and 4^{th}/5^{th} speeds, wherein launch speed is provided by engaged clutch of corresponding gear pair and slipping brake device, 1^{st} and 3^{rd} speeds are provided by engaged clutch of corresponding gear pair, 2^{nd} and 4^{th} speeds are provided by engaged clutch of corresponding gear pair, and engaged lock-up clutch, reverse speed is provided by meshing of the reverse idler with driving gearwheel and driven gearwheel, and engagedbrake device, and launch and 5^{th} speed is provided by engaged clutch of corresponding gear pair and brake device.

In detail the gear ratios of said kinematic connections are assigned in a way that:
- launch speed from the second driveshaft to the driven shaft is provided by a first position of the first clutch and slipping brake device;
- first speed from the first driveshaft to the driven shaft is provided by a second position of the second clutch;
- second speed from the second driveshaft to the driven shaft is provided by a second position of the first clutch;
- third speed from the first driveshaft to the driven shaft is provided by a second position of the third clutch;
- fourth speed from the second driveshaft to the driven shaft is provided by simultaneous engagement of the second clutch and the third clutch, i.e. a first position of the second clutch and a first position of the third clutch;
- fifth speed from the second driveshaft to the driven shaft is provided by a first position of the second clutch and engaged brake device;
- reverse speed from the second driveshaft to the driven shaft is provided by meshing of the reverse idler with the driving wheel of the second driveshaft and driven gearwheel, and engaged brake device.

Clutches which are not referred are switched to neutral positions.

In alternative 3-shaft embodiment the transmission comprises second driveshaft, wherein at least one gearwheel on one of the driveshafts is meshing with two gearwheel located on first and second driven shafts, respectively.

The transmission may comprise a park brake, which locks the driven shaft to the housing.

The number of shifting forks can be reduced down to three if the lock-up clutch and one of the clutches engaging one of the pinions with the first driveshaft, are sharing a common shifting sleeve.

According to a preferred embodiment of the present invention the clutches are engaged by single electrically driven shifting drum, and the reverse idler gearwheel is engaged by separate actuator. A single shifting drum is a low-cost solution for a shifting system. All practically required skipped long shift combinations are possible just with one intermediate shift. According to a low cost variation of the reverse gear actuation the reverse idler gearwheel may be engaged by mechanical drive linked to the hand-operated shifting lever. Alternatively the reverse idler gearwheel may be engaged by electric drive. This shift-by-wire modification provides more comfort to the driver.

In preferred embodiment the rotor of the brake device is coaxial to the input shaft and is connected to the sun gear directly.

In alternative embodiment the rotor of the brake device is connected to the third link of the planetary gearset via cylindrical geartrain, and the axis of the rotor is preferably placed apart from the axis of the input shaft. This feature gives opportunity to reduce rotor inertia, as well as to provide direct liquid rotor cooling through the shaft.

In a preferred embodiment of the invention the brake device is a friction multidisc wet brake. This is a solution with low inertia, good thermal capacity and stable friction factor. In alternative embodiments the brake may be dry friction brake, electric machine, eddy-current brake, hysteresis brake, viscous brake, hydrodynamic brake, powder brake, etc.

The benefits of the inventive method and device are:
1. Design simplicity, cost and weight comparable to automated manual transmission (non-powershifted),
2. Torque filled shifts comparable to powershifted transmissions at least at partial loads.

The invention is explained below in closer detail by reference to the drawings, wherein:
- Fig. 1: is a schematic illustration of a multi speed transmission in a 5-speed embodiment with 5-speed geartrain in accordance with a first embodiment of the invention;
- Fig. 2: is a schematic illustration of a multi speed transmission in a 5-speed embodiment with 5-speed geartrain in accordance with a second embodiment of the invention and
- Fig. 3: is a schematic illustration of a multi speed transmission in a 5-speed embodiment with 5-speed geartrain in accordance with a third embodiment of the invention.

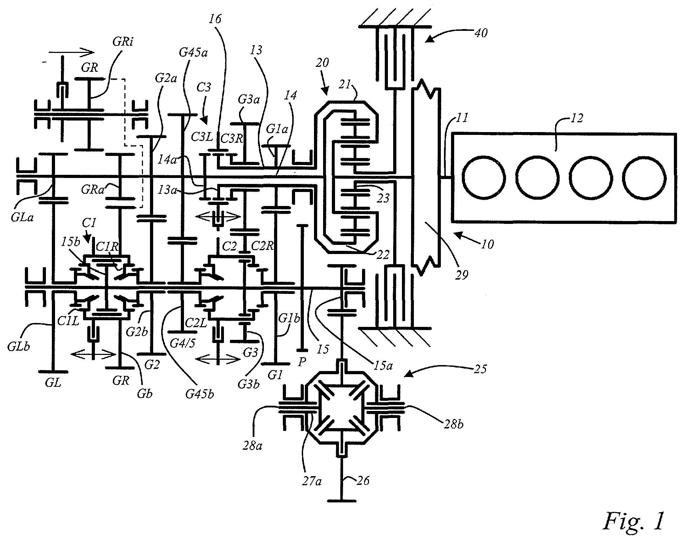

Fig. 1 shows a basic 5-speed embodiment with a 5-speed transmission 10 for a vehicle comprising an input shaft 11 attached to a prime mover 12, for example a combustion engine, a first driveshaft 13 and a second driveshaft 14, wherein the driveshafts 13, 14 are arranged concentrically. In the embodiments the second driveshaft 14 is mounted internally through the first driveshaft 13.

The first driveshaft 13 comprises a plurality of driving gearwheels G1a, G3a for 1^{st} and 3^{rd} speeds G1, G3, meshing with corresponding driven gearwheels G1b and G3b of the driven shaft 15. The second driveshaft 14 has a plurality of driving gearwheels GRa, GLa, G2a, G45a, for reverse GR, launch GL and 2^{nd}, 4^{th}/5^{th} speeds GL, G2, G4/G5, meshing with corresponding driven gearwheels Gb, GLb, G2b, G45b of a driven shaft 15.

The gearwheels GLa, G1a, G2a, G3a, G45a; GLb, G1b, G2b, G3b, G45b for forward speeds are engageable to said shafts 13, 14; 15 with clutches C1L, C1R, C2L, C2L, C2R, C3R forming a power flow from the driveshafts 13, 14 to the driven shaft 15 with different ratios.

At least two gearwheels Gb, G3b for forward speeds are rotationally fixed on the driven shaft 15 in a way that each of them is located between a pair of loose gearwheels GLb, G2b; G45b, G1b, wherein the corresponding double-sided clutch units C1, C2, which engage said loose gearwheels GLb, G2b; G45b, G1b to the driven shaft 15, are also rotationally fixed on the driven shaft 15, and the dog teeth for alternative engagement of the gearwheels GLb, G2b, G45b and G1b are arranged on both sides of the corresponding fixed gearwheels Gb, G3b.

Further the transmission 10 comprises a planetary gearset 20 with three links 21, 22, 23, wherein the first link 21, e.g. a planet carrier, is connected to the first driveshaft 13 and the input shaft 11, the second link 22, e.g. a ring gear, is connected to the second driveshaft 14, and third link 23, e.g. a sun gear, is cinematically connected to the brake device 40. A speed ratio between the second link 22 and the third link 23 is negative for stopped first link 21.

The transmission 10 comprises a first clutch unit C1, a second clutch unit C2 and a third clutch unit C3 forming a power flow from the driveshafts 13, 14 to the driven shaft 15 with different ratios. The first clutch unit C1 comprises a first clutch C1L and a second clutch C1R. The second clutch unit C2 comprises a third clutch C2L and a fourth clutch C2R. The third clutch unit C3 comprises a fifth clutch C3R and a controllable lock-up clutch C3L.

The controllable lock-up clutch C3L is arranged between the driving gears on the driveshafts 13, 14, and connects said driveshafts 13, 14 with each other. Reference numerals 13a and 14a indicate the splines for torque transfer from a shifting sleeve of the lock-up clutch C3L. In the embodiments shown in the Figs. 1 to 3 the lock-up clutch C3L is integrated in the third clutch unit C3. In detail the lock-up clutch C3L and the clutch C3 engage the pinion 13a with the first driveshaft 13 and share a common shifting sleeve 16.

A gearwheel 26 of a differential 25 constantly meshes with a pinion 15a on the driven shaft 15. Driven links 27a, 27b of the differential 25 are connected to output shafts 28a, 28b of the transmission 10. The axis of the gearwheel 26 may be arranged parallel or not parallel to the axis of the input shaft 11. The gearing 15a, 26 may be embodied as cylindrical or bevel, respectively.

C3 and C2R clutches are embodied as dog clutches. Since the braking device 40 can't apply the driving torque, the clutches C1 and C2L are embodied as synchronizers.

A vibration-damping device 29 (e.g. dual-mass flywheel) may be arranged on the input shaft 11.

The clutch units C1, C2 are embodied in a way that each of them can alternatively connect two loose gearwheels GLb, G2b; G1b, G45b to the output shaft 15, and wherein said gearwheels GLb, G2b; G1b, G45b are arranged on opposite sides of the gearwheels Gb; G3b which are rotationally fixed to the output shaft 15.

In a preferred embodiment the first clutch unit C1 is combined with a corresponding driven gearwheel Gb, wherein said driven gearwheel Gb is mounted slidable on the driven shaft 15.

The driven gearwheel Gb may be spur-toothed, and be connected to the driven shaft 15 by splines without helical angle. The dog teeth of the first clutch unit C1 may have symmetric profile in this case.

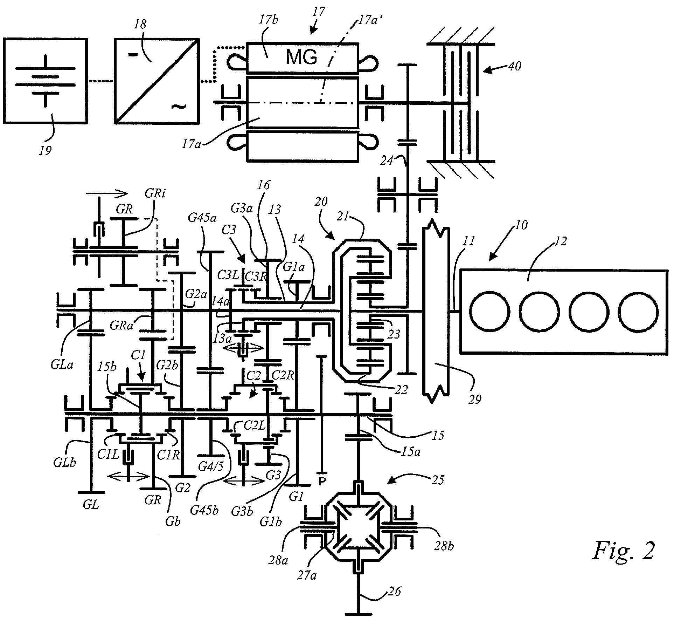

In preferred embodiments shown in Fig. 1 and 2 the second clutch unit C2 is through-mounted on the corresponding driven gearwheel G3b, wherein said driven gearwheel G3b is rigidly fixed on the driven shaft 15.

The transmission 10 may optionally comprise a park ratchet wheel P, rigidly mounted on the driven shaft 15.

The transmission 10 further comprises a brake device 40 with controllable slip, being connected to the third link 23 of the planetary gear 20. The brake device 40 constitutes reaction means for balancing torque. By means of the slipping brake device 40 a passive torque fill with a single brake may be realised. In this way speed ratios and gear ratios may be achieved as follows:
- The speed ratio i_{PGS} between the second link 22 and the third link 23 for stopped first link 21 has a defined value: i_{PGS} <0;
- The first gear ratio i_{G1} of the first gearing G1 on the second driveshaft 14 has a defined value: i_{G1};
- The second gear ratio i_{G2} of the first gearing G2 on the first driveshaft 13 matches the inequality i_{G2} >= i_{G1}/ (1-(1/i_{PGS}));
- The third gear ratio i_{G3} of the second gearing G2 on the second driveshaft 14 matches the inequality i_{G3} >= i_{G2};
- The fourth gear ratio i_{G4} of the second gearing G2 on the first driveshaft 13 matches the inequality i_{G4} >= i_{G3}/ (1-(1/i_{PGS}));
- The fifth gear ratio i_{G5} of the third gearing G3 on the second driveshaft 14 matches the inequality i_{G5} < i_{G4}.

When the boundary of the inequalities is reached i_{G1} = i_{GL}/ (1-(1/i_{PGS})), i_{G3} = i_{G2}/ (1-(1/i_{PGS})) by defining gear ratios, the brake 40 is locked at the end of two torque filled shifts (GL-G1, G2-G3), improving torque fill capacity up to 100%. However, this combination of gear ratios should be avoided, because friction coefficient changes stepwise at zero slip speed, making smooth control challenging.

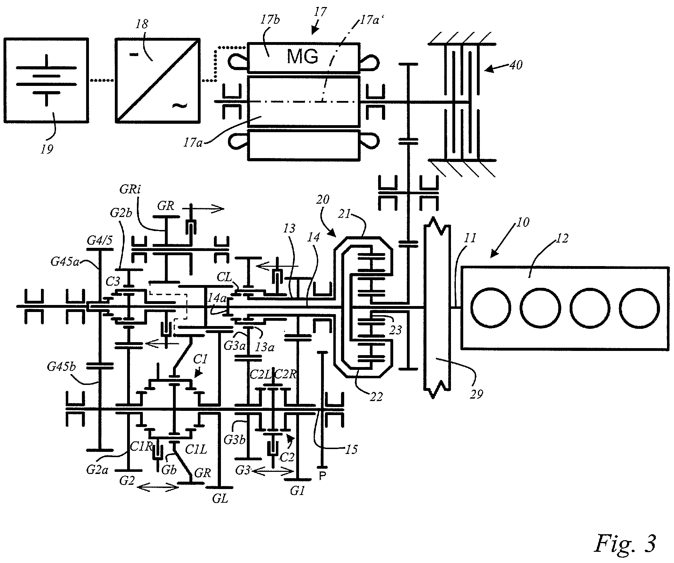

Fig. 2 and 3 show another embodiments of the invention which differ from the transmission 10 shown in Fig. 1 in that each of the transmissions 10 additionally comprise an electric drive 17, e.g., a multi-phase induction machine with a squirrel caged rotor 17a and a stator 17b, wherein the windings of the stator 17b are connected to a multi-phase bi-directional AC power inverter 18 and a battery 19, e.g., a low-voltage 12V battery, via fixed electrical connection.

The brake device 40 is kinematically connected on the one hand to the electric drive 17, on the other hand to the third link 23 via the gearing 24.

A speed ratio i_{PGS} between the second link 22 and the third link 23 for stopped first link 21 has a defined value i_{PGS} <0. The first gear ratio of the first gearing G1 on the second driveshaft 14 has a defined value i_{G1}. The second gear ratio i_{G2} of the first gearing G1 on the first driveshaft 13 matches the inequality i_{G2} >= i_{G1}/ (1-(1/i_{PGS})). The third gear ratio i_{G3} of the second gearing G3 on the second driveshaft 14 matches the inequality i_{G3} < i_{G2}. The fourth gear ratio i_{G4} of the second gearing G2 on the first driveshaft 13 matches the inequality i_{G4} >= i_{G3}/ (1-(1/i_{PGS})). The fifth gear ratio i_{G5} of the third gearing G3 on the second driveshaft 14 matches the inequality i_{G5} < i_{G4}. All gear upshifts from lowest L to the speed 4^{th} prior to highest 5^{th} with torque applied to the input shaft 11 from the prime mover 12 are performed in a way that the brake device 40 applies negative torque to unload the clutch of the current gear. Then said clutch of the current gear is disengaged and the brake device 40 is decelerated. The input shaft 11 decelerates correspondingly until speed synchronization of the clutch of the next gear. Then said clutch of the next gear is engaged, and torque reaction by the brake device 40 is released, wherein the braking power is at least partly dissipated as heat.

A passive torque filled shift comprises a speed synchronization phase and two torque handover phases. During the first torque handover phase the brake device 40 applies rising brake torque up to the level when the fifth clutch C3R is unloaded. The engine torque is kept constant. When the fifth clutch C3R is unloaded, it starts being disengaged. Due to power dissipation in the brake device 40, the wheel torque drops. When the fifth clutch C3R disengagement is complete, speed synchronization phase starts. The control system of the prime mover 12 cuts the firing torque (e.g. by cutting fuel injection or ignition). With brake torque applied by the brake device 40, the engine decelerates. The brake device 40 also decelerates. When the speeds of the teeth of the incoming clutch are synchronized, the firing torque is applied by the engine again to freeze speed ratio. Then second torque handover phase starts. The lock-up clutch C3L is started being engaged. When the lock-up clutch C3L is fully engaged, the brake device releases brake torque. During all shift phases the direction of the brake device 40 rotation is positive, so, torque fill is provided by braking only.

### Shifting table for a transverse arrangement

Each of the first and second embodiments of the transmission 10 shown in Fig. 1 and 2, respectively, comprise five forward gears G1, G2, G3, G4, G5, a launch gear GL, two reverse gears GRL, GR1. The transmission 10 comprises three clutch units C1, C2, C3 with shifting sleeves, each clutch unit C1; C2; C3 including a left side clutch C1L (=first clutch); C2L (=third clutch); C3L (=controllable lock-up clutch) and a right side clutch C1R (second clutch), C2R (=fourth clutch), C3R (=fifth clutch). It enables operating conditions as follows:

| **Gear** | **C1** | **C2** | **C3** | **GRi** | **Brake 40 operation mode** |
|---|---|---|---|---|---|
| GR1 | | | | X | Locked, zero speed |
| GRL - GR1 shift | | | | X | Braking with variable slip |
| GRL | | | L | X | Open, mid speed |
| GR, Moving-off backwards | | | | X | Braking with variable slip |
| N | | | | | Open |
| GL, Moving-off forward | L | | | | Braking with variable slip |
| GL | L | | L | | Open, mid speed |
| GL-G1 shift | L | | | | Braking with variable slip |
| G1, preselected GL | L | R | | | Open, low speed |
| G1, doing preselection | | R | | | Open or assisting shaft synchronization for downshift |
| G1, preselected G2 | R | R | | | Open, high speed |
| G1-G2 shift | R | | | | Braking with variable slip |
| G2 | R | | L | | Open, mid speed |
| G2-G3 shift | R | | | | Braking with variable slip |
| G3, preselected G2 | R | | R | | Open, low speed |
| G3, doing preselection | | | R | | Open or assisting shaft synchronization for downshift |
| G3, preselected G4/5 | | L | R | | Open, high speed |
| G3-G4 shift | | L | | | Braking with variable slip |
| G4 | | L | L | | Open, mid speed |
| G4-G5 shift | | L | | | Braking with variable slip |
| G5 | | L | | | Locked, zero speed |

With reference to Fig. 1 and 2 in the shifting table shown above "L" indicates a left side position (first position), and "R" indicates a right side position (second position) of the shifting sleeves of the clutch units C1, C2, C3. In other words: "L" indicates the closing position of the left side clutch of the corresponding clutch unit C1, C2, C3, "R" indicates the closing position of the right side clutch of the corresponding clutch unit C1, C2, C3. In the left-side position of the shifting sleeves the clutch units C1, C2, C3 are engaged to the corresponding left side gear, respectively. In the right-side position of the shifting sleeves the clutch units C1, C2, C3 are engaged to the corresponding right side gear, respectively. "X" indicates the engagement of the gearing GRi of the reverse gear GR.

### Shifting table for a longitudinal arrangement

The third embodiment of the transmission 10 shown in Fig. 3 comprises five forward gears G1, G2, G3, G4, G5, a launch gear GL, two reverse gears GRL, GR1. The transmission 10 comprises two clutch units C1, C2 with shifting sleeves, each clutch unit C1; C2 including a left side clutch C1L (=first clutch); C2L (=third clutch) and a right side clutch C1R (second clutch), C2R (=fourth clutch). Further the transmission 10 comprises a fifth clutch C3R and a controllable lock-up clutch C3L. The transmission enables operating conditions as follows:

| **Gear** | **C1** | **C2** | **C3** | **CL** | **GR** | **Brake 40 operation mode** |
|---|---|---|---|---|---|---|
| GR1 | | | | | X | Locked, zero speed |
| GRL - GR1 shift | | | | | X | Braking with variable slip |
| GRL | | | | X | X | Open, mid speed |
| GR, Moving-off backwards | | | | | X | Braking with variable slip |
| N | | | | | | Open |
| GL, Moving-off forward | R | | | | | Braking with variable slip |
| GL | R | | | X | | Open, mid speed |
| GL-G1 shift | R | | | | | Braking with variable slip |
| G1, preselected GL | R | R | | | | Open, low speed |
| G1, doing preselection | | R | | | | Open or assisting shaft synchronization for downshift |
| G1, preselected G2 | L | R | | | | Open, high speed |
| G1-G2 shift | L | | | | | Braking with variable slip |
| G2 | L | | | X | | Open, mid speed |
| G2-G3 shift | L | | | | | Braking with variable slip |
| G3, preselected G2 | L | L | | | | Open, low speed |
| G3, doing preselection | | L | | | | Open or assisting shaft synchronization for downshift |
| G3, preselected G4/5 | | L | X | | | Open, high speed |
| G3-G4 shift | | | X | | | Braking with variable slip |
| G4 | | | X | X | | Open, mid speed |
| G4-G5 shift | | | X | | | Braking with variable slip |
| G5 | | | X | | | Locked, zero speed |

With reference to Fig. 3 in the shifting table shown above "L" indicates a left side position (first position), and "R" indicates a right side position (second position) of the shifting sleeves of the clutch units C1, C2. In other words: "L" indicates the closing position of the left side clutch of the corresponding clutch unit C1, C2, "R" indicates the closing position of the right side clutch of the corresponding clutch unit C1, C2. In the left-side position of the shifting sleeves the clutch units C1, C2 are engaged to the corresponding left side gear, respectively. In the right-side position of the shifting sleeves the clutch units C1, C2 are engaged to the corresponding right side gear, respectively. "X" indicates the engagement (=closing) positions of the fifth clutch C3 and of the controllable lock-up clutch CL.

Sample gear ratios for two embodiments are shown below:

| | 5-speed transverse embodiment with non-geometric stepping | | | 5-speed longitudinal embodiment with geometric stepping | | |
|---|---|---|---|---|---|---|
| Gear | Ratio | **Spread/** step | Min. torque fill at WOT,% | Ratio | **Spread/** step | Min. torque fill at WOT,% |
| Planetary gearset | -2.86 | - | - | -2.86 | - | - |
| Final drive | 4.00 | - | - | - | - | - |
| GL | 4.00 | - | - | 1.80 | - | - |
| G1 | 3.00 | - | - | 1.35 | - | - |
| G2 | 1.81 | - | - | 1.00 | - | - |
| G3 | 1.35 | - | - | 0.75 | - | - |
| G4 (CM gearing) | 1.00 | - | - | 0.55*⁾ (1.80) | - | - |

| Output transmission ratios | | | | | | |
|---|---|---|---|---|---|---|
| "Launch" | 16.00 | **5.4** | - | 3.25 | **4.4** | - |
| 1st | 11.97 | 1.34 | 99 | 2.43 | 1.34 | 99 |
| 2nd | 7.25 | 1.65 | 74 | 1.80 | 1.35 | 74 |
| 3rd | 5.41 | 1.34 | 99 | 1.35 | 1.34 | 99 |
| 4th | 4.00 | 1.35 | 74 | 1.00 | 1.35 | 74 |
| 5th | 2.96 | 1.35 | 100 | 0.74 | 1.35 | 100 |

| | | | | | | |
|---|---|---|---|---|---|---|
| *⁾ The ratio of the G4 gearing in longitudinal embodiment is an inverse of the constant meshing gear ratio (CM-gearing=constant meshing gearing). The main difference between the transverse and longitudinal embodiments is that the output power is taken off from the output shaft 15 in transverse embodiment and from the G45a (driving) gear in longitudinal embodiment. | | | | | | |

## Claims

1. A multi-speed transmission (10), especially for a vehicle, comprising an input shaft (11), a first driveshaft (13) having at least one driving gearwheel (G1a, G2a, G3a, G4a, G5a), a second driveshaft (14), having at least two driving gearwheels (GRa, GLa, G1a, G2a, G3a, G34a, G45a), at least one driven shaft (15) with a plurality of gearwheels (Gb, GLb, G1b, G2b, G3b, G4b, G34b, G45b) on it meshing with the driving gearwheels (GRa, GLa, G1a, G2a, G3a, G4a, G34a, G45a) on said driveshafts (13, 14), said gearwheels (GRa, GLa, G1a, G2a, G3a, G4a, G34a, G45a; Gb, GLb, G1b, G2b, G3b, G4b, G34b, G45b) for forward speeds being engageable to said shafts (13, 14; 15, 16) with a first clutch (C1L) a second clutch (C1R), a third clutch (C2L), a fourth clutch (C2R) and a fifth clutch (C3R) forming a power flow from said driveshafts (13, 14) to the driven shaft (15) with different ratios, a controllable lock-up clutch (C3L) being arranged between the driveshafts (13, 14), connecting said driveshafts (13, 14) with each other, a brake device (40) with controllable slip, a planetary gearset (20) with three links (21, 22, 23), a first (21) of said links being connected to the first driveshaft (13) and the input shaft (11), a second link (22) being connected to the second driveshaft (14), and a third link (23) being kinematically connected to said brake device (40), **characterised in that**
- a speed ratio i_{PGS} between the second link (22) and the third link (23) for stopped first link (21) has a defined value: i_{PGS} <0;
- a first gear ratio i_{G1} of the first gearing (G1) on the second driveshaft (14) has a defined value: i_{G1};
- a second gear ratio i_{G2} of the first gearing (G1) on the first driveshaft (13) matches the inequality i_{G2} >= i_{G1}/ (1-(1/i_{PGS}));
- a third gear ratio i_{G3} of the second gearing (G2) on the second driveshaft (14) matches the inequality i_{G3} < i_{G2};
- the gear ratio i_{G4} of the second gearing (G2) on the first driveshaft (13) matches the inequality i_{G4} >= i_{G3}/ (1-(1/i_{PGS}));
- the gear ratio i_{G5} of the third gearing (G3) on the second driveshaft (14) matches the inequality i_{G5} < i_{G4}.

2. The multi-speed transmission (10) according to claim 1, **characterised in that** the fourth clutch (C2R) and the fifth clutch (C3R) controlling the powerflow from the first driveshaft (13) and the lock-up clutch (C3L) are dog clutches and the first clutch (C1L), the second clutch (C1R) and the third clutch (C2L) controlling the powerflow from the second driveshaft (14) are synchronizer units.

3. The multi-speed transmission (10) according to claim 1, **characterised in that** it further comprises an electric drive (17), kinematically connected to the brake device (40), wherein preferably the first clutch (C1L), the second clutch (C1R), the third clutch (C2L), the fourth clutch (C2R), the fifth clutch (C3R) and the lock-up clutch (CL) are dog clutches.

4. The multi-speed transmission (10) according to one of the claims 1 to 3, **characterised in that** the first link (21) of the planetary gearset (20) is a planet carrier, the second link (22) is a ring gear, and the third link (23) is a sun gear.

5. The multi-speed transmission (10) according to one of the claims 1 to 4, **characterised in that** first driveshaft (13) is mounted internally through the second driveshaft (14).

6. The multi-speed transmission (10) according to one of the claims 1 to 5, **characterised in that** the first driveshaft (13) comprises at least two gearwheels (G1a, G3a, G2a, G4a, G5a), meshing with the gearwheels (G1b, G3b, G2b, G4b, G5b) on the driven shaft (15), and the second driveshaft (14) comprises at least three gearwheels (GRa, GLa, G1a, G2a, G3a, G34a, G45a), meshing with corresponding gearwheels (Gb, GLb, G1b, G2b, G3b, G34b, G45b) on the driven shaft (15), wherein one gearwheel in each said gear meshing is constantly connected to corresponding shaft, and another gearwheel in said gear meshing is engageable to corresponding shaft by one of said clutches (C1L, C1R, C2L, C2R, C3L, C3R).

7. The multi-speed transmission (10) according to one of the claims 1 to 6, **characterised in that** the first driveshaft (13) comprises at least two gearwheels (G2a, G5a), meshing with the gearwheels (G2b, G5b) on the driven shaft (15), and the second driveshaft (14) comprises at least two gearwheels (G1a, G34a), meshing with corresponding gearwheels (Gb, G1b, G34b) on the driven shaft (15), wherein one gearwheel in each said gear meshing is constantly connected to corresponding shaft, and another gearwheel in said gear meshing is engageable to corresponding shaft by one of said clutches (C1L, C1R, C2L, C2R, C3L, CR3), the transmission (10) further comprises the output shaft (28) with fixed gearwheel, arranged coaxially with input shaft (11), the driven shaft (15) comprises a fixed pinion, meshing with the gearwheel of the output shaft (28), and the second driveshaft (14) is directly engageable to the output shaft (28) by one of said third or fourth clutches (C2L, C2R).

8. The multi-speed transmission (10) according to one of the claims 1 to72, **characterised in that** a vibration-damping device (29) is arranged on the input shaft (11).

9. The multi-speed transmission (10) according to one of the claims 1 to 8, **characterised in that** it comprises a park brake (P), locking the driven shaft (15) to the housing of the transmission (10).

10. The multi-speed transmission (10) according to one of the claims 1 to 9, **characterised in that** the lock-up clutch (C3L) and one of the clutches (C3R) engaging one of the pinions (13a) with the first driveshaft (13), are sharing a common shifting sleeve (16).

11. The multi-speed transmission (10) according to one of claims 1 to 10, **characterised in that,** the transmission (10) further comprises reverse pinion (GRa), fixed on the second driveshaft (14), the reverse driven gear, rotationally fixed on the driven shaft (15), and the reverse idler gearwheel (GRi), wherein the clutches (C1, C2, C3, CL) are engaged by a single electrically driven shifting drum and the reverse idler gearwheel (GRi) is engaged by separate actuator.

12. The multi-speed transmission (10) according to one of the claims 1 to 11, **characterised in that** the brake device (40) is connected to the third link (23) of the planetary gearset (20) via a cylindrical geartrain (24), and the axis of the brake device (40) is placed apart from the axis of the input shaft (11).

13. Method for operating a multi-speed transmission (10) of a vehicle, comprising an input shaft (11), a first driveshaft (13), a second driveshaft (14), each of the two concentric driveshafts (13, 14) having a plurality of driving gearwheels (GRa, GLa, G1a, G2a, G3a, G4a, G34a, G45a,) on them, a driven shaft (15) with a plurality of gearwheels (Gb, GLb, G1b, G2b, G3b, G4b, G34b, G45b) on it, meshing with the driving gearwheels (GRa, GLa, G1a, G2a, G3a, G4a, G34a, G45a) on said driveshafts (13, 14), a plurality of controllable clutches (C2R, C3R) for kinematic connection of the first driveshaft (13) to the driven shaft (15) with different gear ratios, a plurality of controllable clutches (C1L, C1R, C2L) for kinematic connection of the second driveshaft (14) to the driven shaft (15) with different gear ratios, a controllable lock-up clutch (C3L) for direct connection between first (13) and second (14) driveshafts, a brake device with controllable slip, a planetary gearset (20) with three links (21, 22, 23), a first (21) of said links being connected to the first driveshaft (13) and the input shaft (11), a second link (22) being connected to the second driveshaft (14), and third link (23) being kinematically connected to said braking device (40), **characterised in that** a speed ratio (i_{PGS}) between the second link (22) and the third link (23) for stopped first link (21) has a defined value i_{PGS} <0, a first gear ratio (i_{G1}) of the first gearing (G1) on the second driveshaft (14) has a defined value i_{G1}, a second gear ratio (i_{G2}) of the first gearing (G1) on the first driveshaft (13) matches the inequality i_{G2} >= i_{G1}/ (1-(1/i_{PGS})), a third gear ratio (i_{G3}) of the second gearing (G2) on the second driveshaft (14) matches the inequality i_{G3} < i_{G2}, a fourth gear ratio (i_{G4}) of the second gearing (G2) on the first driveshaft (13) matches the inequality i_{G4} >= i_{G3}/ (1-(1/i_{PGS})), a fifth gear ratio (i_{G5}) of the third gearing (G3) on the second driveshaft (14) matches the inequality i_{G5} < i_{G4}, and that all gear upshifts from lowest (L) to the speed (4^{th}) prior to highest (5^{th}) with torque applied to the input shaft (11) from the prime mover (12) are performed in a way that the brake device (40) applies negative torque to unload the clutch of the current gear, then said clutch of the current gear is disengaged, then the brake device (40) is decelerated, the input shaft (11) decelerates correspondingly until speed synchronization of the clutch of the next gear, then said clutch of the next gear is engaged, and then torque reaction by the brake device (40) is released, wherein the braking power is at least partly dissipated as heat.

14. Method for operating a multi-speed transmission (10) of a vehicle, according to claim 13, **characterised in that** the electric drive (17) assists the braking device (40) thus partly recovering the braking energy to an electric system of the vehicle.

15. Method for operating a multi-speed transmission (10) of a vehicle, according to claim 13 or 14, **characterised in that** gear upshifts from the speed (4^{th}) prior to highest (5^{th}) to the highest (5^{th}) with torque applied to the input shaft (11) from the prime mover (12) are performed in a way that the brake device (40) applies negative torque to unload the clutch of the current gear, then said clutch is disengaged, then the brake device (40) is decelerated, the input shaft (11) decelerates correspondingly until full stop of the brake device (40), and then the brake device (40) continuously applies braking torque to provide torque reaction on the highest speed (5^{th}).
